(19) **Europäisches Patentamt / European Patent Office / Office européen des brevets**

(11) **EP 3 333 728 A1**

(12) **EUROPEAN PATENT APPLICATION**

(43) Date of publication:
13.06.2018 Bulletin 2018/24

(51) Int Cl.:
*G06F 17/30* (2006.01)　　　*G06F 17/27* (2006.01)
*G06N 5/04* (2006.01)　　　*G06Q 10/04* (2012.01)

(21) Application number: 17164321.6

(22) Date of filing: 31.03.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 12.12.2016 IN 201621042411

(71) Applicant: Tata Consultancy Services Limited
Maharashtra (IN)

(72) Inventors:
• DEY, Lipika
122003 Gurgaon, Haryana (IN)
• SARASWAT, Nidhi
122003 Gurgaon, Haryana (IN)
• VERMA, Ishan
122003 Gurgaon, Haryana (IN)
• SRINIVAS, Ananda Padmanaban
122003 Gurgaon, Haryana (IN)

(74) Representative: Goddar, Heinz J.
Boehmert & Boehmert
Anwaltspartnerschaft mbB
Pettenkoferstrasse 22
80336 München (DE)

(54) **SYSTEM AND METHOD FOR ANALYZING RESEARCH LITERATURE FOR STRATEGIC DECISION MAKING OF AN ENTITY**

(57) A system and method for analyzing research literature for strategic decision making is disclosed. The method includes obtaining the patent literature and research publication documents from the database and indexing the data obtained. Further, obtaining a plurality of topics and obtaining a set of phrases that occur frequently within the research publication documents of each of the topics. Furthermore, a degree of topic overlap is computed between the plurality of research publication documents and the patent literature and the degree of topic overlap is quantified to obtain technological insights that include measuring commercialization and predicting patent trends. Further, a set of reports are generated based on the technological insights and the data obtained from indexing the patent literature and the research publication documents. The set of reports generated are provided to a user from an entity based on a role and designation of the user in the entity.

FIG. 2

EP 3 333 728 A1

**Description**

PRIORITY

The present invention claims priority to Indian Application (Title : System and method for analyzing research literature for strategic decision making) No. 201621042411, filed in India on December 12, 2016.

TECHNICAL FIELD

The disclosure herein generally relate to research literature and, more particularly, to system and method for analyzing research literature for strategic decision making of an entity.

BACKGROUND

Generally, knowledge repositories are analyzed to estimate the technological developments for strategic planning of an entity. Knowledge repositories includes patents and research documents that utilize a number of tools for patent search and analysis such as google patents, free patents online and others. The different kinds of patent analysis includes topic driven patent analysis and mining system that analyzed evolution of patent networks over time using data about companies, inventors and technical contents. An example for analytical tool includes excavating rules between two different time periods of patents to determine trend change. Another example analytical tool constructing a meta tree based on the assign and the filing date. The existing techniques utilize the patent technology or research documents to analyze the technology evolution.

SUMMARY

Embodiments of the present disclosure present technological improvements as solutions to one or more of the above-mentioned technical problems recognized by the inventors in conventional systems. For example, in one embodiment, a method for analyzing the research literature for strategic decision making of an entity is disclosed. The method includes obtaining the research literature that includes a plurality of research publication documents and patent literature from a database and further indexing the patent literature based on the patent class number and associated class titles. Furthermore, a plurality of topics are determined from the research publication documents and the research publication documents and associated topics are indexed based on the contents of the plurality of topics wherein the contents include plurality of topics in a domain, associated year of publication and other associated contents in the index. Subsequently, a set of phrases occurring frequently in the research publication documents of each of the topics are determined. Further, a degree of topic overlap is computed between the research publication documents and the patent literature and the degree of topic overlap is quantified to obtain technological insights. Further, the technological insights include measuring commercialization and predicting the patent classes that are to be exploiting the research. Further based on the technological insights, contents of the research publication documents and the contents of the patent literature, a set of reports are generated and sent to user of an entity based on the roles of the user in the entity.

In another embodiment, a system analysis of information technology production service support metrics is disclosed. The system includes at least one processor, and a memory communicatively coupled to the at least one processor, wherein the memory comprises of several modules. The modules include analysis module that analyses the patent literature and research publication documents to obtain technological insights that include predicting the patent classes that are to be exploiting to assist in strategic decision making of the entity. The module receives the research literature from the database that includes a plurality of research publication documents and patent literature from a database and further indexing the patent literature based on the patent class number and associated class titles. Furthermore, a plurality of topics are determined from the research publication documents and the research publication documents and the topics are indexed based on the contents of the plurality of topics wherein the contents include plurality of topics in a domain, associated year of publication and other associated contents in the index. Subsequently, a set of phrases occurring frequently in the research publications documents of each of the topics are determined. Further, a degree of topic overlap is computed between the research publication documents and the patent literature and the degree of topic overlap is quantified to obtain technological insights. Further, the technological insights include measuring commercialization and predicting the patent classes that are to be exploiting the research. Further based on the technological insights, contents of the research publication documents and the contents of the patent literature, a set of reports are generated and sent to user of an entity based on the roles of the user in the entity

In yet another embodiment, a non-transitory computer readable medium embodying a program executable in a computing device for analyzing the research literature for strategic decision making of an entity is disclosed. The one or more instructions which when executed by one or more hardware processors causes obtaining the research literature that includes a plurality of research publication documents and patent literature from a database and further indexing the patent literature based on the patent class number and associated class titles. Furthermore, a plurality of topics are determined from the research publication documents and the research publication documents and associated topics are indexed based on the contents of the plurality of topics wherein the contents include plurality of topics in a domain, associated year of publication and other associated contents in the index. Subsequently, a set of phrases occurring frequently in the research publication documents of each of the topics are determined. Further, a degree of topic overlap is computed between the research publication documents and the patent literature and the degree of topic overlap is quantified to obtain technological insights. Further, the technological insights include measuring commercialization and predicting the patent classes that are to be exploiting the research. Further based on the technological insights, contents of the research publication documents and the contents of the patent literature, a set of reports are generated and sent to user of an entity based on the roles of the user in the entity.

It is to be understood that both the foregoing general description and the following detailed description are explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is a system for analyzing research literature for strategic decision making of an entity, according to an embodiment of a present subject matter.
FIG. 2 is an architecture of the system for predicting the technology trends, according to an embodiment of a present subject matter.
FIG. 3 is an example of a topic evolution tree in a scientific and technological domain, according to an embodiment of a present subject matter.
FIG. 4 is a flowchart illustrating a method for analyzing the research literature for strategic decision making in an entity, according to an embodiment of a present subject matter.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

The terms "documents" and "literature" are used interchangeably throughout the document.

The present description discloses a method for analyzing the research literature for strategic decision making of the entity. The method includes obtaining the research literature that includes patent literature and research publication documents for the analysis. The patent literature is indexed by the content of the patent literature that include a plurality of patent documents, associated class number, associated class titles and associated year of filing of the patent document. A plurality of topics are determined from the research publication documents and the index is fed with the contents of the research publication documents that include plurality of the topics, set of phrases associated with the plurality of the topics, and associated year of publication and other information associated with the research publication documents. A set of phrases occurring frequently in the research publication documents of the topic are determined from the extracted topics and a degree of topic overlap is computed between the research publication documents and the patent literature and the topic overlap is quantified. Further, based on the quantified topic overlap technological insights are obtained that include measuring commercialization for each of the plurality of topics and the patent classes that are to be exploited in the domain are predicted. A set of reports are generated for a plurality of roles based on the technological insights and contents of the research publication documents and the contents of the patent literature.

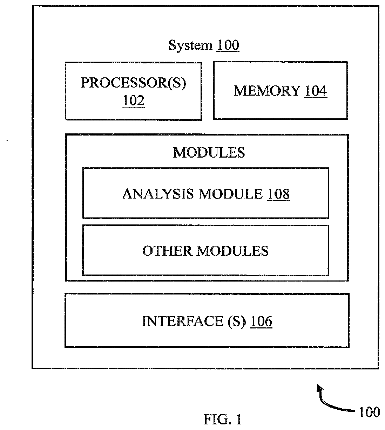

FIG. 1 illustrates a system 100 for analyzing the research literature for strategic decision making of an entity, according to an embodiment of a present subject matter. As shown in FIG. 1, the system 100 includes one or more processor(s) 102 and a memory 104 communicatively coupled to each other. The system 100 also includes interface(s) 106. Further, the memory 104 includes modules, such as an analysis module 108 and other modules. Although FIG. 1 shows example components of the system 100, in other implementations, the system 100 may contain fewer components, additional components, different components, or differently arranged components than depicted in FIG. 1.

The processor(s) 102 and the memory 104 may be communicatively coupled by a system bus. The processor(s) 102 may include circuitry implementing, among others, audio and logic functions associated with the communication.

The processor(s) 102 may include, among other things, a clock, an arithmetic logic unit (ALU) and logic gates configured to support operation of the processor(s) 102. The processor(s) 102 can be a single processing unit or a number of units, all of which include multiple computing units. The processor(s) 102 may be implemented as one or more microprocessors, microcomputers, microcontrollers, digital signal processors, central processing units, state machines, logic circuitries, and/or any devices that manipulate signals based on operational instructions. Among other capabilities, the processor(s) 102 is configured to fetch and execute computer-readable instructions and data stored in the memory 104.

The functions of the various elements shown in the figure, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional, and/or custom, may also be included.

The interface(s) 106 may include a variety of software and hardware interfaces, for example, interfaces for peripheral device(s), such as a keyboard, a mouse, an external memory, and a printer. The interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the interface(s) 106 may include one or more ports for connecting the system 100 to other devices.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory 104, may store any number of pieces of information, and data, used by the system 100 to implement the functions of the system 100. The memory 104 may be configured to store information, data, applications, instructions or the like for enabling the system 100 to carry out various functions in accordance with various example embodiments. Additionally or alternatively, the memory 104 may be configured to store instructions which when executed by the processor(s) 102 causes the system 100 to behave in a manner as described in various embodiments. The memory 104 includes the analysis module 108 and other modules. The module 108 the module 108 include data acquisition layer 202, data representation layer 204, indexing layer 206 and data analysis layer 208. The module 108 also includes routines, programs, objects, components, data structures, etc., which perform particular tasks or implement particular abstract data types. The other modules may include programs or coded instructions that supplement applications and functions of the system 100. The analysis module 108 is explained in detail in the following description.

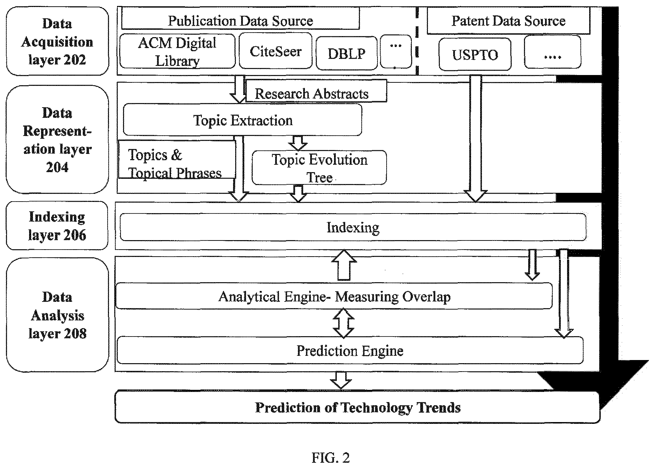

In operation, the analysis module 108 obtains the research literature as input and processes the research literature to predict the technology trends that assists an entity for strategic decision making. FIG. 2 is an architecture of the system for predicting the technology trends, according to an embodiment of a present subject matter. The architecture 200 consists of analysis module 108 that consists of four layers that include the data acquisition layer 202, the data representation layer 204, the indexing layer 206 and the data analysis layer 208. The data acquisition layer 202 includes obtaining database for research literature. The research literature includes patent literature and research publication documents that are published from different sources of the databases. The different sources for patent literature include USPTO and other patent literature databases. The patent literature in the present disclosure includes a plurality of patent applications that have been filed but not yet granted as the present disclosure claims to capture the technologies which are new and are yet to be adopted widely. The data acquisition layer 202 collects the contents of the patent literature for the patents available in the database. The research publication documents includes public documents about academic research and industrial research. The sources for research publication documents include ACM Digital Library, ARNETMINER, Citeseer and PubMed. The research documents belonging to different domains like Computer Science, Life Sciences etc. are extracted from the different sources. Each domain is represented as a temporal collection of topics extracted from annual collections of scientific publications from a specific digital repository. Further, the data representation layer 204 collects the data from the data acquisition layer 202 to represent and arrange the data. A plurality of topics are extracted from annual collections of research publication documents using Latent Dirichlet Allocation (LDA) technique.

. The contents of the patent literature include title of the patent, associated inventors, associated affiliation (not mandatory), associated year of filing, associated grant year (if applicable), associated classification information, associated abstract and an assigned patent classes/area of innovation that best defines the invention.

Further, the indexing layer 206 performs indexing of the research literature. The data obtained from the different databases related to different patent literature is considered as content and patent literature is indexed. The contents of patent literature include a plurality of patent documents, associated class number, associated class titles and associated year of filing of the patent documents. Similarly, contents of research publication documents is also fed into the index by indexing the contents of the research publication documents. The contents of research publication documents include the plurality of topics associated with the domain, name of the publication of each of the research publication documents, associated name of the authors, associated abstract, associated affiliations if any, associated year of publication and other data. Each topic $t^Y$ is associated to the documents published in year Y, provided the relative presence of the topic is more than the user-specified threshold. Every topic is then represented by a set (for example, the set can be ten) of phrases that are identified from the sets of frequently occurring two grams and three grams across topical documents that are associated to the topic. In other words, if $\mathbb{R}^Y$ represents topics extracted from publications data for year Y, then for every topic $t^Y \in \mathbb{R}^Y$.

$$ t^Y : \{ (\hat{p}^Y_k, w_k) \mid 1 <= k <= 10, w_k > w_{(k+1)} \} $$

where each phrase $\hat{p}^y_k$ is associated with a weight $w_k$ that denotes the significance of phrase. The significance of a phrase determines the set of phrases that are occurring frequently. The importance of a phrase $\hat{p}^y_k$ within document collection "$d$" belonging to a domain is a weighing function given by $\sigma(\hat{p}^y_k)$

$$ \sigma_d (\hat{p}^y_k) = f * (\log (f / x)) $$

where f is frequency of $\hat{p}^y_k$ in $d$ and $\chi$ denotes the number of documents that contain $\hat{p}^y_k$. The domain D represented by its entire document collection is thus represented as $D = U_Y \mathbb{R}^Y$.

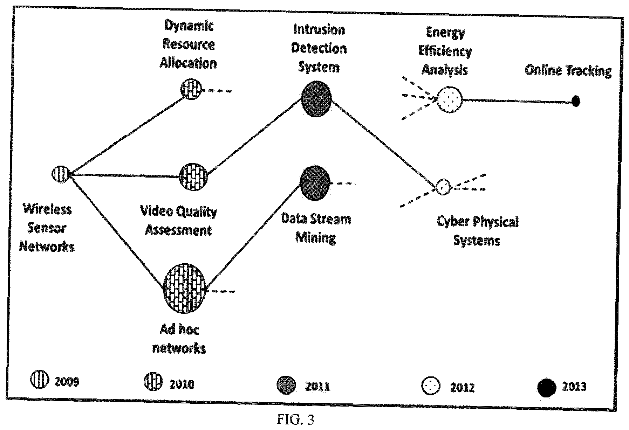

Further, the data analysis layer 208 builds a topic evolution tree with the topics extracted from the research publication documents based on the set of phrases to detect topic significance and topic evolution. The layer 208 measures the similarity of topics in terms of topic overlap of documents and phrases containing them. The topics originating from a common source and diverging thereafter are represented using a topic evolution tree. For instance, in a scientific and technological domain, the research topics emerge, diverge, gain popularity and also sometimes morph into different forms. FIG. 3 is an example of a topic evolution tree in a scientific and technological domain, according to an embodiment of a present subject matter.

Generally, it can be observed that while some topics grow rapidly or even exponentially in popularity, and some may see slow or steady growth. For instance, some topics show longer life-time than others. Therefore, the system analyzes the topic evolution by capturing all the characteristics of the research topics in the domain by analyzing the topic evolution tree.

In an embodiment, the method for constructing topic evolution tree is disclosed. Let $S_i$ and $S_j$ be the sets of top n3 phrases associated to the topics $t_i$ and $t_j$ respectively. Let $\hat{p}_i$ and $\hat{p}_j$ represent two phrases where $\hat{p}_i \in S_i$ and $\hat{p}_j \in S_j$. Let $d_i$ and $d_j$ denote the collections of documents that contain $\hat{p}_i$ and $\hat{p}_j$ respectively. $d_i$ and $d_j$ might be same, overlapping or completely disjoint. The degree of overlap of these two sets capture the neighborhood similarity of $\hat{p}_i$ and $\hat{p}_j$, denoted by $\eta(\hat{p}_i, \hat{p}_j)$ and is computed using Jaccard's Coefficient. For each phrase $\hat{p}_i \in S_i$, let $\alpha_j \in S_j$ be the phrase with maximum value for $\eta(\hat{p}_i, \alpha_j)$ i.e. $(\hat{p}_i, \alpha_j) \geq \eta(\hat{p}_i, \hat{p}_j) \forall \hat{p}_j \in S_j$. In other words, the phrase $\hat{p}_i$ of topic $t_i$ co-occurs maximally with $\alpha_j$ of $t_j$. Similarly, for each phrase $\hat{p}_j \in S_j$ let $\beta_i \in S_i$ be the phrase with maximum value for $\eta(\beta_i, \hat{p}_j)$ i.e. $\eta(\beta_i, \hat{p}_j) \geq \eta(\hat{p}_i, \hat{p}_j) \forall \hat{p}_i \in S_i$. In an embodiment, neighborhood similarities for a pair of phrases are not symmetric in nature. The similarity between a pair of topics is computed as the average neighborhood similarity between all pairs of topical phrases for the pair.

$$\sigma\ (t_i, t_j) = 1/2n\ (\ \Sigma^n_{i=1}\ \eta(\beta_i, \alpha_j) + \Sigma^n_{j=1}\ \eta(\beta_i, \beta_j)\ )$$

The evolution of a topic $t^T$ is represented in the form of a tree where root node of the topical tree is topic $t^T$ in year T. An edge between two topics in topic evolution tree signifies similarity between the two topics.

The process of building topic evolution tree for all topics extracted over all years between T and Y, where T<=Y, both inclusive, is stated below:

> *Step 1:* Let $t^T$ be a topic in year T.
>
> *Step 2:* Add topic node $t^T$ to tree $\mathcal{T}$ at level k=0.
>
> *Step 3:* While ((T+k)<=Y)
>
>> *Step 3.1:* L'= Leaf nodes in $\mathcal{T}$ at level k.
>>
>> *Step 3.2:* For each leaf node $t^{(T+k)}_j$ in E:
>>
>>> *Step 3.2.1:* Find all the topics $t^{(T+k+1)}_j$ in year (T+k+1) with ($\sigma(t^{T+k}_j, t^{T+k+1}_i)$) > $\tau$, where $\tau$ is similarity threshold.
>>>
>>> *Step 3.2. 2:* Add the topic nodes found in previous step to T at level (k+1) as children to topic node $t^{(T+k)}_j$.
>>
>> *Step 3.3:* k=k+1

Starting with a single topic, $t^T$, the set of topics obtained for the evolutionary tree of $t^T$ is termed as topical family of $t^T$.

Further the data analysis layer 208 analyses the data obtained from the topical overlap tree to measure a degree of topic overlap between the research publication documents and the patent literature. The data analysis layer computes three scores in data analysis layer 208 to quantify the degree of topical overlap between the research publication documents and the patent literature. The three score computed are a topical overlap score, an annual research exploitation score and an aggregate research exploitation score.

In an embodiment, the data analysis layer 208 computes the topical overlap score. In an embodiment, for every year T of publications data, the collection of research topics is denoted by $\mathcal{R}^T$. Further, each topic $t^T \in \mathcal{R}^T$ is represented by a set of most significant phrases. An example for a set of most significant phrases is ten. The topical overlap score is a function of occurrence of these topical phrases in patent documents, and is computed as follows.

Let $\ominus$ (p,$t^T$, Y) denote the topical overlap between a patent document p applied in year Y with respect to topic $t^T$ where T<=Y. This is computed using the following equation:

$$\ominus (p, t^T, Y) = \Sigma^{10}_{k=1}(n * w_k)$$

where T<=Y; $(\beta^T_k, w_k)\ \varepsilon\ t^T$ and n is number of occurrences of phrase $\beta^T_k$ in patent document p.

The topical overlap score for year Y for a patent class P with respect to a topic $t^T$ is calculated as an aggregate:

$$\xi (P, t^T, Y) = \Sigma_{p_i \in P}\ \ominus (p_i, t^T, Y)$$

$\xi$**(P, $t^T$, Y)** quantifies the extent of exploitation of research topic $t^T$ by patent class P in year Y.

Subsequently, the data analysis layer computes the annual research exploitation score by a patent class. The annual research exploitation score is computed to determine the exploitation of annual research topics $\mathcal{R}^T$ by patents applied in a patent class P in any subsequent year Y. Assuming that $\mathcal{R}^T$ contains K number of topics, this is denoted by $\alpha$(P, $\mathcal{R}^T$, Y) and is computed as follows:

$$\propto (P, \mathbb{R}^T, Y) = \sum_{j=1,\ t_j^T \in \mathbb{R}^T}^{K} \xi (P, t_j^T, Y)$$

Further, the data analysis layer 208 computes the aggregate research exploitation score by a patent class. The layer 208 computes aggregate research exploitation score to determine the exploitation of the domain by patent applications of the contents of the patent literature applied in any subsequent year Y under different patent classifications. This score, denoted by $\overline{Æ}$ (P, Y, z), where z is the number of years for which aggregate research exploitation is computed, is obtained as follows:

$$\bar{Æ} (P, Y, z) = \sum_{T=Y-z}^{Y} \propto (P, \mathbb{R}^T, Y)$$

Subsequent to the computation of three scores to quantify the degree of overlap, the data analysis layer obtains technological insights. The technological insights include measuring commercialization of each of the topics, predicting the patent classes that are likely to exploit current research topics, predicting the promising topics and patenting trends of topic evolution trees. The layer 208 measures commercialization of the topics by computing an exploitation of each of the plurality of the topics on the multiple patent classes of the contents of the patents literature. The computation of commercialization can be computed by extending the exploitation of the research topic by a patent class to all the patent classes.

$$K(t^T, Y) = \sum_{\forall P} \xi (P, t^T, Y)$$

The topic commercialization score K ($t^T$, Y) is further represented in the form of 5-point discretized scale, using equal discretization over all non-zero scores and are denoted by Very High, High, Medium, Low and Very Low.

Initially, the Aggregate Research Exploitation Score is normalized for all patent classes annually. The normalized Aggregate Research Exploitation Score $\overline{Æ}$ (P) for each patent class P , for past few years is used to obtain the historical trends of adoption of research areas in domain D by patent class P. The best fit curve is obtained on normalized Aggregate Research Exploitation Score of past few years (example: four years) for each patent class P. The best fitting curve is further utilized to predict the Aggregate Research Exploitation Score for class P in subsequent year. A top set of patent classes (example: top twenty classes) P with highest estimated Aggregate Research Exploitation Score is the set of predicted highly potential areas of patenting in next consecutive years.

However, a research topic is not a static entity. The research topic evolves and morphs over time. Multiple research topics for the same year may also be thematically related to each other. Keeping track of evolution and divergence of a research topic over years can greatly assist in analyzing the changing trends of a research topic in a more meaningful way. A research topic that gathers popularity at a rapid pace or shows rapid adoption and diversification in allied areas, can be termed as a promising topic. Predictive technologies may also be employed to study the commercialization trends of promising topics and thereby identify commercial white-spaces that can be applied to generate new ideas. The predictive technologies to detect application white-spaces is presented below.

In an embodiment, a topic $t_n \in \mathbb{R}_Y$ is considered to be promising, if any of the following conditions are fulfilled.

(a) for all topic $t_m$ belonging to time periods less than Y, is less than a prespecified threshold
(b) if for any $t_k$ belonging to time periods less than Y, is greater than the threshold then the total number of documents associated to topic $t_n$ is x% greater than total number of documents associated with $t_k$.

In an embodiment, the data analysis layer 208 analyzes topic trends for a topic tree. Therefore, after a topic evolution tree is constructed for a topic, the layer 208 analyzes topic trends to determine the overlap of all the topics for each of the promising topic. The topic evolution tree for each promising topic is further used to find the overlap of all the topics in topic evolution tree with various areas of patenting.

The overlap of each topical node at level $t_j^{T+k}$, with patent class P in year Y, can be expressed in terms of $\xi$ (P, $t_j^{T+k}$, Y). The Topical Family Overlap Score gives the extent of exploitation of all the topics in topical family ($Et^T$) by patent class P in year Y. It is computed with respect to all the nodes $t^{(T+k)}_j$ in topic evolution tree of promising topic $Et^T$ as:

$$\zeta(P, Et^T, Y) = \sum_{k=0}^{Y-T} \xi\left(\mathbf{P}, t^{(T+k)}, \mathbf{Y}\right)$$

$\zeta(P, Et^T, Y)$ of Topical Family of promising topic (EtT) when aggregated over all the patent classes results into Overall Commercialization Score of promising topic $Et^T$ and its evolved topics. Overall Commercialization Score, $(Et^T, Y)$ is computed as

$$(Et^T, Y) = \frac{1}{|T|} \sum_{\forall P} \zeta(P, Et^T, Y)$$

where |T| represents number of nodes in topical tree of $Et^T$. This score is indicative of extent of exploitation of promising topics and the topics evolved from it by all the areas of patenting. The proposed system predicts new technology adoption trends based on this overall score by identifying the top set of promising topical families (example: top ten of promising topical families) with highest overall commercialization scores. For each of these topical families, top list of areas (example: five areas) of patenting based on highest $\zeta(P, Et^T, Y)$ are given as predictions for commercialization of promising areas in subsequent year.

Further, based on the technological insights, the contents of the patent literature and the contents of the research publication documents, a set of reports are generated. The examples of the reports include top 30 popular research for a given year, top emerging research topics for a given year, top research topics whose strength have fallen over years, prediction of top patent classes likely to exploit research topics of a domain in near future and others.

| Role | Responsibility | Useful Reports |
|------|----------------|----------------|
| CTO | • Identify opportunities and risks for the business.<br>• Manage research and development (R&D).<br>• Monitor technology and social trends that could impact the company.<br>• Participate in management decisions about corporate governance.<br>• Communicate the company's technology strategy to partners, management, investors and employees. | top 30 popular research for a given year, top emerging research topics for a given year, top research topics whose strength have fallen over years, Patent Statistics of Forbes most innovative companies for a given period of time, Prediction of top patent classes likely to exploit research topics of a domain in near future |
| Research Leader | • Shape research ideas and give direction to ongoing research.<br>• Align the research in progress to satisfy customer needs. | Top Journals with highest number of publications in a given period of time, Top emerging research topics for a given year, Top research topics whose strength have risen over years |
| Business Leader | • Providing efficient solutions to customers, solving current problems in a domain.<br>• Increase customer and business associated with the organization.<br>• Collaborate with different verticals/horizontals within the organization to facilitate better business. | Patent Statistics for a given period of time of top USPTO patent classes with highest number of patent applications, Extent of commercial<br><br>exploitation of research topics for a given year, Identification of promising research topics for a given period of time |

In an embodiment, the memory includes a company's database containing user details. The user details like roles, responsibilities etc. with respect to logged-in user are retrieved from DB. Further, a mapping is performed between different the roles- responsibilities of the users in the company and reports suitable for each of the user's role are customized and sent to the user.

The user accessing the set of report can comment on the reports, rate the reports and view the comments provided by the other users on the reports. Additionally, the user can also mark the reports to another user. The system also provides facility to create groups where users can share their comments on different reports available. A feature of notifications of new activities in any of the logged-in user's group is also provided.

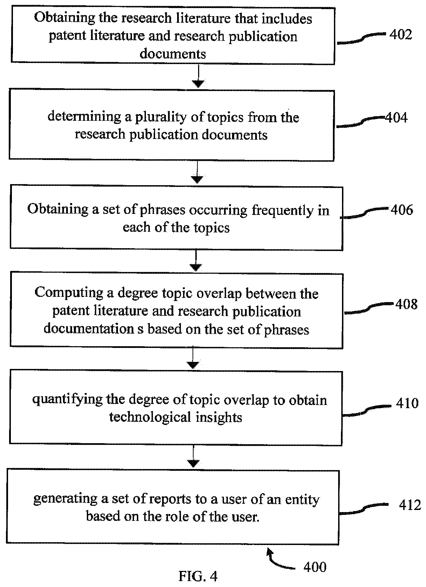

FIG. 4 is a flowchart illustrating a method for analyzing the research literature for strategic decision making in an entity, according to an embodiment of a present subject matter. At block 402, the research literature that includes patent literature and research publication documents is obtained. Further at block 404, a plurality of topics from the research publication documents are obtained and the patent literature and the research publication documents are indexed. At block 406, a set of phrases occurring frequently in each of the topics are determined. Further at block 408, a degree of topic overlap is computed between the patent literature and research documents based on the degree of topic overlap and the index of the patent literature. At block 410, the degree of topic overlap is quantified to obtain technological insights. At block 412, a set of reports are generated and customized reports are sent to user that are obtained based on the technological insights and the research publication documents and patent literature indexed.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant arts based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

**Claims**

1. A method for analyzing research literature for strategic decision making of an entity, comprising

   obtaining the research literature comprising (i) a plurality of research publication documents and (ii) patent literature from a database and indexing content of the patent literature in an index based on a plurality of patent classifications, associated class numbers and associated class titles in the index;

determining a plurality of topics that are frequently occurring in the plurality of research publication documents and indexing contents of the plurality of the research publication documents in the index based on the plurality of topics, wherein the contents of the plurality of the research documents comprises of the plurality of topics in a domain, name of the publication, associated year of publication, associated authors of the publication and associated authors;

obtaining a set of phrases occurring frequently within the research publication documents of each of the plurality of topics, wherein the set of phrases comprises of a plurality of bigrams and trigrams associated with each of the plurality of topics;

computing a degree of topic overlap between the plurality of the research publication documents and the patent literature by comparing the set of phrases and associated contents of the plurality of topics from the index of the research publication documents with the plurality of class numbers and the associated class titles of the patent literature;

quantifying the degree of topic overlap between the plurality of research publication documents and the patent literature to obtain technological insights, wherein technological insights include measuring commercialization, predicting the patent that are to be exploiting the research done in the domain and predicting patent trends in the research; and

generating a set of reports for a plurality of roles based on (i) the technological insights (ii) the contents of the patent literature and (iii) the contents of the research publication documents and facilitating collaborative decision making for the strategic decision making of the entity.

2. The method according to claim 1, wherein computing the degree of topic overlap comprises of computing (i) topical overlap score based on the exploitation of plurality of topics from the index of the research publication documents by the plurality of patent classifications from the index of patent literature, (ii) annual research exploitation score based on exploitation of annual research topics by the plurality of patent classifications and (iii) aggregate research exploitation score based on exploitation of the domain by the plurality of patent classifications from the index of the patent literature.

3. The method according to claim 1, wherein generating a set of reports for the plurality of roles comprises generating customized reports for the roles defined in the entity.

4. A system for analyzing research literature for strategic decision making of an entity, the system comprising of:

at least one processor (102); and

a memory (104) communicatively coupled to the at least one processor (102), wherein the memory (104) comprises

an analysis module (108) to :

obtain the research literature from (i) a plurality of research publication documents and (ii) patent literature from a database and indexing content of the patent literature in an index based on a plurality of patent classifications, associated class numbers and associated class titles in an index;

determine a plurality of topics that are frequently occurring in the plurality of research publication documents and indexing contents of the plurality of the research publication documents in the index based on the plurality of topics wherein the contents comprises plurality of topics in a domain, associated year of publication and other associated contents in the index;

obtain a set of phrases occurring frequently within the research publication documents of each of the plurality of topics wherein the set of phrases comprises a plurality of bigrams and trigrams associated with each of the plurality of topics;

compute a degree of topic overlap between the plurality of the research publication documents and the patent literature by comparing the set of phrases and associated contents of the plurality of topics from the contents of the research publication documents with the plurality of class numbers and the associated class titles of the patent literature;

quantify the degree of topic overlap between the plurality of research publication documents and the patent literature to obtain technological insights, wherein technological insights include measuring commercialization, predicting the patent that are to be exploiting the research done in the domain and predicting patent trends in the research; and

generate a set of reports for a plurality of roles based on (i) the technological insights (ii) the contents of the patent literature and (iii) the contents of the research publication documents and facilitating collaborative decision making for the strategic decision making of the entity.

5. The method according to claim 5, wherein computing the degree of topic overlap comprises computing (i) topical overlap score based on the exploitation of plurality of topics from the index of the research publication documents by the plurality of patent classifications from the index of patent literature, (ii) annual research exploitation score exploitation of annual research topics by the plurality of patent classifications and (iii) aggregate research exploitation score exploitation of the domain by the plurality of patent classifications from the index of the patent literature.

6. The system according to claim 4, wherein generating a set of report for the plurality of roles comprises generating customized reports for the roles defined in the entity and facilitating the collaborative decision making.

7. A non-transitory computer readable medium embodying a program executable in a computing device for strategic decision making of an entity, the program comprising:

a program code for obtaining the research literature comprising (i) a plurality of research publication documents and (ii) patent literature from a database and indexing content of the patent literature in an index based on a plurality of patent classifications, associated class numbers and associated class titles in the index;
determining a plurality of topics that are frequently occurring in the plurality of research publication documents and indexing contents of the plurality of the research publication documents in the index based on the plurality of topics, wherein the contents of the plurality of the research documents comprises of the plurality of topics in a domain, name of the publication, associated year of publication, associated authors of the publication and associated authors;
obtaining a set of phrases occurring frequently within the research publication documents of each of the plurality of topics, wherein the set of phrases comprises of a plurality of bigrams and trigrams associated with each of the plurality of topics;
computing a degree of topic overlap between the plurality of the research publication documents and the patent literature by comparing the set of phrases and associated contents of the plurality of topics from the index of the research publication documents with the plurality of class numbers and the associated class titles of the patent literature;
quantifying the degree of topic overlap between the plurality of research publication documents and the patent literature to obtain technological insights, wherein technological insights include measuring commercialization, predicting the patent that are to be exploiting the research done in the domain and predicting patent trends in the research; and
generating a set of reports for a plurality of roles based on (i) the technological insights (ii) the contents of the patent literature and (iii) the contents of the research publication documents and facilitating collaborative decision making for the strategic decision making of the entity.

FIG. 1

100

System 100

PROCESSOR(S)
102

MEMORY 104

MODULES

ANALYSIS MODULE 108

OTHER MODULES

INTERFACE (S) 106

| Data Acquisition layer 202 | Publication Data Source | | | | Patent Data Source | |
|---|---|---|---|---|---|---|
| | ACM Digital Library | CiteSeer | DBLP | ... | USPTO | .... |

| Data Represent-ation layer 204 | Research Abstracts |
|---|---|
| | Topic Extraction |
| | Topics & Topical Phrases |
| | Topic Evolution Tree |

| Indexing layer 206 | Indexing |
|---|---|

| Data Analysis layer 208 | Analytical Engine- Measuring Overlap |
|---|---|
| | Prediction Engine |

**Prediction of Technology Trends**

FIG. 2

13

FIG. 3

Obtaining the research literature that includes patent literature and research publication documents — 402

determining a plurality of topics from the research publication documents — 404

Obtaining a set of phrases occurring frequently in each of the topics — 406

Computing a degree topic overlap between the patent literature and research publication documentations based on the set of phrases — 408

quantifying the degree of topic overlap to obtain technological insights — 410

generating a set of reports to a user of an entity based on the role of the user. — 412

400

FIG. 4

Europäisches Patentamt

European Patent Office

Office européen des brevets

# EUROPEAN SEARCH REPORT

Application Number

EP 17 16 4321

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DEY LIPIKA ET AL: "Obtaining Technology Insights from Large and Heterogeneous Document Collections", 2014 IEEE/WIC/ACM INTERNATIONAL JOINT CONFERENCES ON WEB INTELLIGENCE (WI) AND INTELLIGENT AGENT TECHNOLOGIES (IAT), IEEE, vol. 1, 11 August 2014 (2014-08-11), pages 102-109, XP032665297, DOI: 10.1109/WI-IAT.2014.22 [retrieved on 2014-10-16] * abstract; figures 1-6, 8-9 * * page 102, right-hand column, line 16 - page 103, left-hand column, last line * * page 104, left-hand column, paragraph III - page 108, left-hand column, line 18 * * page 108, right-hand column, paragraph VI - page 109, left-hand column, paragraph VII * | 1-7 | INV. G06F17/30 G06F17/27 G06N5/04 G06Q10/04 |
| X | LIPIKA DEY ET AL: "Information Retrieval and Visualization for Searching Scientific Articles and Patents", RESEARCH IN COMPUTING SCIENCE, SPECIAL ISSUE: ADVANCES IN COMPUTATIONAL LINGUISTICS, vol. 90, no. 2015, 1 May 2015 (2015-05-01), pages 265-282, XP055403680, ISSN: 1870-4069 * abstract; figures 1-6 * * page 265, last line - page 266, last line * * pages 268-272, paragraph 3 * * page 275, paragraph 4 - page 279, last line * * tables 2, 3 * | 1-7 | TECHNICAL FIELDS SEARCHED (IPC) G06F G06N G06Q |

The present search report has been drawn up for all claims

| Place of search | Date of completion of the search | Examiner |
|---|---|---|
| Munich | 7 September 2017 | Laurentowski, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 333 728 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 201621042411